**Europäisches Patentamt**

**European Patent Office**

**Office européen des brevets**

(19)

(11) Numéro de publication: **0 128 826
B1**

(12) # FASCICULE DE BREVET EUROPEEN

(45) Date de publication du fascicule du brevet:
**14.09.88**

(51) Int. Cl.⁴: **B 29 C 67/12**

(21) Numéro de dépôt: **84401164.3**

(22) Date de dépôt: **06.06.84**

(54) **Système intégré de drapage assisté pour la réalisation de pièces en matériaux composites.**

(30) Priorité: **08.06.83 FR 8309512**

(43) Date de publication de la demande:
**19.12.84 Bulletin 84/51**

(45) Mention de la délivrance du brevet:
**14.09.88 Bulletin 88/37**

(84) Etats contractants désignés:
**DE GB IT NL SE**

(56) Documents cités:
**EP - A - 0 073 708
US - A - 2 451 483
US - A - 4 133 711
US - A - 4 285 752
US - A - 4 292 108**

**PLAST-VERARBEITER, volume 33, no. 4, avril 1982
(Speyer/Rhein, DE) W. ERMERT et al.: "Herstellung von
Bauteilen aus CFK mit Industrierobotern", pages
399-403**

(73) Titulaire: **SOCIETE NATIONALE INDUSTRIELLE
AEROSPATIALE, 37 boulevard de Montmorency,
F-75016 Paris Cedex 16 (FR)**

(72) Inventeur: **Boire, Maxime, 11, Avenue Sainte-Marie,
F-92370 Chaville (FR)**
Inventeur: **Jumel, Jean-Pierre, 67, Avenue du Belloy,
F-78110 Le Vesinet (FR)**
Inventeur: **Marechal, Patrick, 15, rue du Général Leclerc,
F-92270 Bois Colombes (FR)**

(74) Mandataire: **Mongrédien, André et al, c/o SOCIETE DE
PROTECTION DES INVENTIONS 25, rue de Ponthieu,
F-75008 Paris (FR)**

**Description**

La présente invention concerne un système intégré de drapage assisté pour la réalisation de pièces en matériaux composites. Elle trouve notamment son application dans la réalisation de pièces composites drapées utilisées dans l'industrie aéronautique.

Une pièce drapée consiste en un empilage de plis découpés dans un matériau en bande. Ce matériau est constitué de fibres, par exemple de fibres de carbone ou de fibres de kevlar, parallèles entre elles ou tissées, et pré-imprégnées de résine. Cette surface collante est recouverte d'un papier séparateur.

Chaque pli de la pièce est défini par un contour géométrique et une orientation des fibres du matériau dans la surface définie par ce contour. Un pli peut être réalisé d'un seul tenant, mais il est plus généralement constitué d'une juxtaposition de découpes réalisées dans une bande de matériau préimprégné.

De manière générale, un procédé de réalisation d'une pièce drapée comprend les opérations suivantes: définition des découpes de chaque pli de la pièce, réalisation de ces découpes dans le matériau, réalisation de la pièce par empilage des plis, puis compactage. La dernière opération est la cuisson de la pièce drapée compactée pour polymériser la résine. L'invention concernant le drapage, cette dernière opération ne sera pas évoquée dans la suite de la description. La réalisation d'une pièce drapée est connue aussi bien par des méthodes artisanales que par des machines automatisées.

La technique artisanale est excellente en ce qui concerne la qualité des pièces réalisées. Cependant, une pièce drapée comportant typiquement une trentaine de plis constitués chacun d'une dizaine de découpes, il est évident qu'une telle méthode manuelle de drapage est lente. Il s'ensuit que la pièce réalisée a un prix de revient élevé.

On connaît également des techniques de drapage dans lesquelles certaines opérations sont automatisées. En particulier, il est courant de réaliser les découpes au moyen d'une machine de découpe équipée d'un poste de commande numérique. Ceci permet, par rapport à la technique artisanale, d'obtenir des découpes de géométrie parfaite et de manière plus rapide. Ces machines, performantes, découpent simultanément plusieurs plis et permettent en général de réaliser un placement optimisé des différentes découpes. Cependant, cette méthode conduit à effectuer des opérations de tri, de stockage et de gestion qui sont complexes et délicates à appliquer dans ce domaine.

On connaît enfin, notamment par le document US-A-4 133 711, des machines à draper selon le préambule de la revendication 1, qui réalisent le drapage d'une pièce de manière totalement automatique. Une telle machine prend en entrée le matériau préimprégné par exemple sous forme de bande, et délivre en sortie une pièce drapée compactée. Ce type de machine est comparable à une grosse machine outil comprenant des moyens de coupe, des moyens de préhension et de transport des découpes, des moyens de positionnement de ces découpes et des moyens de compactage. Par rapport aux deux techniques précédentes, cette machine à draper a l'avantage de la rapidité. Dans ce type de machine, l'opérateur peut éventuellement procéder à un contrôle visuel d'un pli en cours de traitement, grâce à une caméra disposée au-dessus du plan de travail.

Cependant, certaines étapes du procédé de réalisation d'une pièce drapée sont mal maîtrisées par les machines à draper. En particulier, la mise en place des découpes collantes pose des problèmes qui entraînent un taux important de rebut des pièces réalisées par ces machines. De plus, lorsqu'une découpe a été déposée à sa place sur le plan de travail, il faut éliminer le papier séparateur qui recouvre les fibres. Il n'est pas rare qu'au cours de cette élimination, de menus morceaux de papier séparateur restent adhérents à la découpe. Lorsque cette opération est réalisée par un opérateur humain, comme dans le cas des deux premières techniques décrites, celui-ci s'en aperçoit et peut retirer lesdits morceaux de papier séparateur. Dans le cas d'une machine à draper, le contrôle de l'élimination du papier séparateur est automatisé et les défauts rencontrés sont difficiles à corriger.

L'objectif de l'invention est de remédier aux inconvénients des techniques évoquées. La technique de drapage de l'invention est une technique de drapage comportant des opérations automatisées et dans laquelle un opérateur humain est assisté par des moyens automatiques dans ses opérations manuelles. En tout état de cause, l'opérateur humain garde la maîtrise du système de drapage.

De manière précise, l'invention a pour objet un système intégré de drapage pour la réalisation d'une pièce drapée constituée d'un empilage de plis, chaque pli étant constitué d'une juxtaposition de découpes, ledit système comprenant:

– une machine de découpe comprenant un outil de coupe, ladite machine étant commandée par un poste de commande numérique préprogrammé pour réaliser des découpes de formes prédéterminées dans un matériau composite recouvert d'un papier séparateur,

– un dispositif de drapage comprenant un plan de travail destiné à recevoir les découpes produites par la machine de découpe,

– un moyen de compactage pour compacter une pièce présente sur le plan de travail,

– un dispositif de commande comprenant:

a) un moyen de génération des formes des découpes d'une pièce drapée, en fonction de la forme de ladite pièce et de la forme du matériau composite utilisé,

b) un moyen de commande pour programmer le poste de commande numérique selon les formes des découpes définies par le moyen de génération,

– un moyen de contrôle pour saisir une image de la pièce en cours de réalisation sur le plan de travail, ledit système étant caractérisé en ce qu'il est un système de drapage assisté comprenant en outre:

- un moyen d'analyse, élément du dispositif de commande, pour analyser une image délivrée par le moyen de contrôle afin de vérifier soit la position, soit l'orientation, soit la présence de papier séparateur sur une découpe ou un pli déposé sur le plan de travail, le résultat de ladite analyse étant transmis au moyen de commande,

- un moyen d'assistance comprenant un moyen de visualisation, ledit moyen d'assistance recevant des informations du moyen de commande pour guider un opérateur dans la réalisation d'une pièce drapée, lesdites informations comprenant des informations fonction du résultat d'une analyse réalisée par le moyen d'analyse.

D'autres caractéristiques et avantages de l'invention ressortiront mieux de la description qui va suivre, donnée à titre illustratif mais non limitatif en référence aux dessins annexés dans lesquels:

- la figure 1 représente de façon schématique l'obtention d'une pièce drapée à partir du matériau en bande,

- la figure 2 présente un système intégré de drapage selon l'invention.

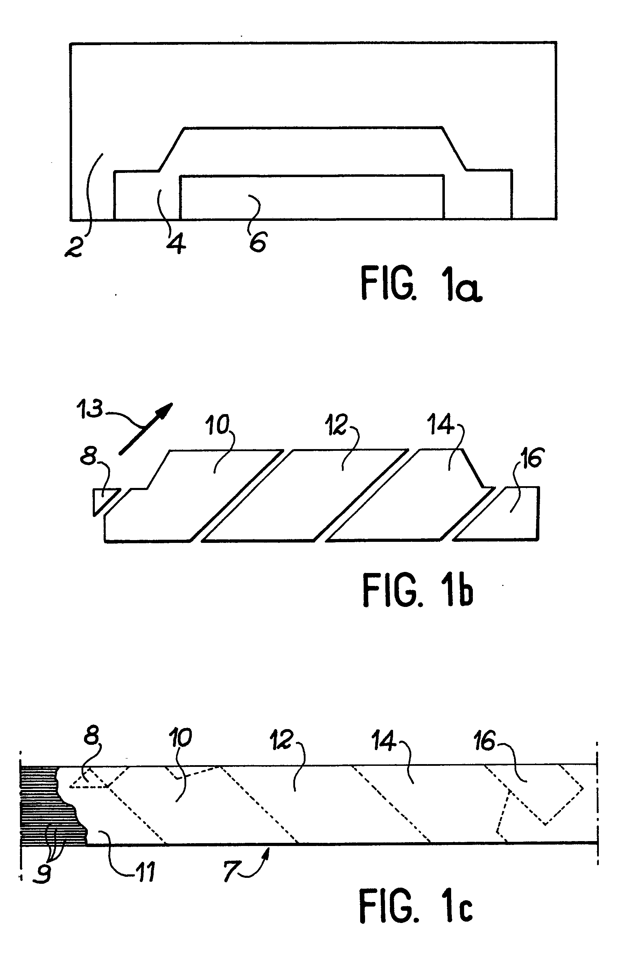

Les figures 1a, 1b et 1c montrent comment on obtient une pièce drapée à partir du matériau en bande. La pièce représentée schématiquement en vue de dessus sur la figure 1a comprend trois contours 2, 4 et 6. On a représenté sur la figure 1b l'un des plis épousant le contour 4. Ce pli est défini par le contour 4 et par l'orientation des fibres du matériau en bande représentée par la flèche 13. Le pli est obtenu par la juxtaposition des découpes 8, 10, 12, 14 et 16. Ces découpes ont été réalisées dans le matériau en bande tel que représenté sur la figure 1c.

Le matériau en bande est constitué de fibres de carbone 9 imprégnées de résine et recouvertes par un papier siliconé séparateur 11. Ce papier comprend généralement des repères, tels que des traits parallèles aux fibres du matériau dessinés sur le papier siliconé 11, pour que l'on puisse connaître l'orientation des fibres d'une découpe même après mise en place de celle-ci.

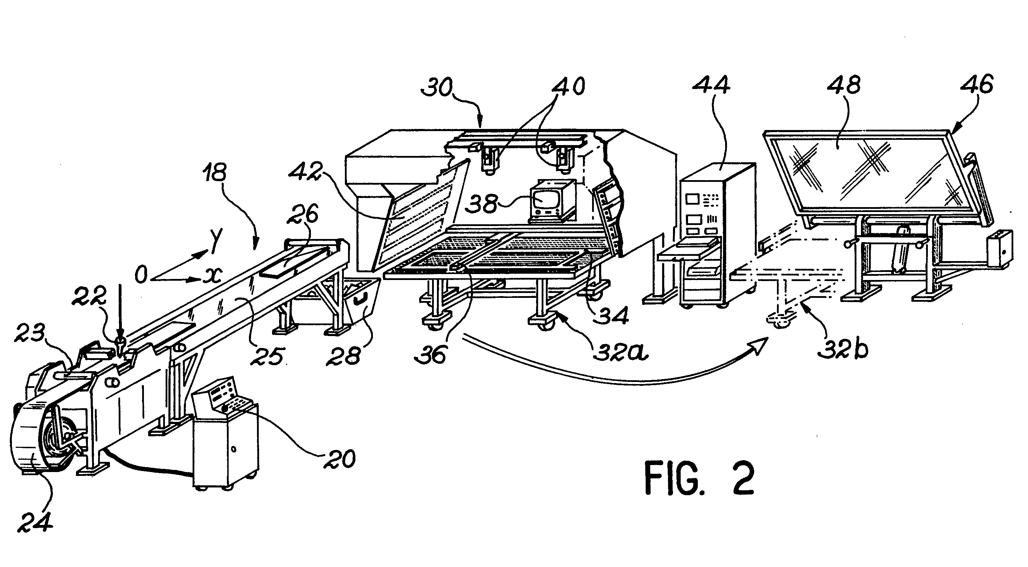

On a représenté sur la figure 2, un système de drapage selon l'invention. Ce système comporte quatre éléments principaux: une machine de découpe 18, un dispositif de drapage 30, un dispositif de commande 44 et un moyen de compactage 46.

La machine de découpe 18 est automatique; elle est pilotée par un poste de commande numérique 20. Elle comporte un outil de coupe 22 qui est par exemple une buse de découpe à haute pression. Cet outil est mobile en translation le long d'un axe OY. La machine de découpe 18 comprend d'autre part des moyens 23 pour déplacer le matériau en bande 24 selon une direction OX perpendiculaire à OY. La combinaison de ces deux mouvements permet de réaliser des découpes de géométrie quelconque. La machine de découpe 18 peut comprendre également un tapis roulant 25 qui permet de faire avancer les découpes réalisées telles que 26, ou d'évacuer les chutes dans un bac de réception 28. La commande de ce tapis roulant 25, et donc l'élimination des chutes, est réalisée par le poste de commande numérique 20.

Le deuxième élément du système de drapage est constitué par le dispositif de drapage 30. Celui-ci peut recevoir un plan de travail mobile 32a. Sur ce plan de travail, un cadre 34 et une réglette mobile 36 permettent de définir un rectangle dans lequel le pli à réaliser est inscrit. Le dispositif de drapage 30 comprend en outre des moyens d'assistance 38 permettant d'indiquer à un opérateur humain d'une part, sous forme de graphique, la position et l'orientation dans le pli à réaliser de la découpe 26 en attente sur la machine de découpe 18, et d'autre part, sous forme de texte, des informations de contrôle, des ordres d'exécution, etc... Le dispositif de drapage 30 comprend enfin des moyens d'éclairage 42 et des moyens de contrôle 40 permettant d'effectuer des contrôles en cours de fabrication.

La machine de découpe 18 et le dispositif de drapage 30 sont tous deux reliés (par des liaisons non représentées) à un dispositif de commande 44. Celui-ci comprend des moyens de génération qui, au vu de la pièce à réaliser, envoient des informations au poste de commande numérique de la machine de découpe 18. Le dispositif de commande 44 comprend en outre des moyens de commande délivrant des informations aux moyens d'assistance 38 et des moyens d'analyse recevant des informations des moyens de contrôle 40 et les transmettant aux moyens de commande. Le dispositif de commande 44 est par exemple un système à microprocesseur.

Le système comprend enfin un moyen de compactage 46 comprenant une membrane 48 abaissable.

Le système intégré de drapage fonctionne de la façon suivante: dans un premier temps, il faut calculer à partir de la géométrie de la pièce à réaliser, les découpes nécessaires. Ceci est réalisé par les moyens de génération inclus dans le dispositif de commande 44.

La première étape consiste à définir la pièce, c'est-à-dire les plis constituant cette pièce en associant un contour et une orientation de fibres pour chaque pli.

La deuxième étape consiste à concevoir à partir de la définition précédente de la pièce et compte tenu de la largeur de bande du matériau, les découpes qui serviront à constituer les différents plis. Cette deuxième étape comprend les opérations suivantes: calage d'une grille au pas correspondant à la largeur de bande et orienté suivant la définition du pli, calcul des découpes ainsi engendrées, renumérotation éventuelle de ces découpes de manière à les draper dans un ordre correct.

Cette deuxième étape peut par exemple être réalisée de manière interactive avec un opérateur par le dispositif de commande 44 équipé de périphériques graphiques apte à visualiser les découpes. Lorsqu'une pièce a été définie, les découpes associées à cette pièce sont mémorisées. De manière générale, l'ensemble des pièces peut être mémorisé dans une bibliothèque de pièces.

Lorsque les moyens de génération ont défini une pièce à réaliser, les informations concernant les découpes associées à cette pièce sont fournies au poste de commande numérique 20 de la machine de découpe 18.

L'opération de drapage peut commencer. Sur un ordre de synchronisation issu des moyens de commande, le poste de commande numérique 20 va réaliser une première découpe. Pendant ce temps, l'opérateur positionne le plan de travail 32a dans le dispositif de drapage 30 et ajuste la réglette 36 pour définir un rectangle dans lequel s'inscrit le premier pli à réaliser. Lorsque la machine de découpe 18 a réalisé la première découpe, le moyen de commande envoie au moyen d'assistance 38 du dispositif de drapage 30, des informations graphiques pour aider l'opérateur au positionnement de cette découpe dans le rectangle défini par le cadre 34 et la réglette 36, et diverses instructions. Ces informations graphiques comprennent par exemple une représentation du rectangle défini par le cadre 34 et la réglette 36, une représentation du contour du pli en cours de réalisation et une représentation, dans ce contour, de la découpe à positionner.

Lorsque l'opérateur a positionné la découpe sur le plan de travail, les moyens de contrôle 40 comprenant par exemple des moyens de saisie d'image transmettent la position de cette découpe et l'orientation des fibres (connues par les repères tracés sur le papier séparateur) aux moyens d'analyse du dispositif de commande pour vérification. Les moyens d'analyse sont également aptes à déceler la présence de corps étrangers tels que des morceaux de papier séparateur qui peuvent se trouver à l'endroit de dépose du pli suivant.

Si les moyens d'analyse ne décèlent aucune anomalie, le dispositif de commande 44 commande par l'intermédiaire des moyens de commande la préparation d'une nouvelle découpe par la machine de découpe 18, pendant que l'opérateur termine le drapage de la première découpe. Si tel n'est pas le cas, le dispositif de commande 44 informe l'opérateur de la nature du défaut par l'intermédiaire de signaux envoyés par les moyens de commande aux moyens d'assistance 38.

Si la correction du défaut est possible, et tel est le cas par exemple d'une mauvaise position d'une découpe, l'opérateur effectue la modification demandée par les moyens d'assistance 38 et le dispositif de commande 44 recommence un cycle de contrôle.

Si le défaut n'est pas corrigible, cela est affiché par les moyens d'assistance 38. Si cependant, le défaut n'est pas préjudiciable à la qualité de la pièce, l'opérateur a la faculté de forcer ce contrôle et de continuer la réalisation de cette pièce. Si le défaut est préjudiciable à la qualité de la pièce, la pièce en cours de réalisation est abandonnée et mise au rebut.

On voit ainsi que le moyen de découpe 18 libère totalement l'opérateur de la phase découpe qui s'effectue en même temps que le drapage. De même, les moyens de contrôle 40 et les moyens d'assistance 38 permettent d'assister le travail de l'opérateur. Celui-ci est ainsi déchargé des phases délicates de positionnement d'une découpe, ce qui diminue le taux d'erreurs. Par ailleurs, le dispositif de drapage selon l'invention, comportant un double contrôle, automatique et humain, limite le nombre de pièces mises au rebut. De plus, dans le cas où une pièce présente un défaut non corrigible, la pièce est mise au rebut immédiatement.

Outre les informations graphiques déjà mentionnées, les moyens d'assistance 38 délivrent des informations textuelles. Ce peut être des informations de mauvais positionnement ou d'orientation d'une découpe, mais aussi des ordres d'élimination du papier séparateur, des ordres de positionnement du cadre 34 et de la réglette 36 du plan de travail, ou un ordre de compactage.

La dernière étape de réalisation d'une pièce drapée est le compactage. Celui-ci peut être effectué lorsque la pièce est terminée mais il peut l'être aussi après qu'un nombre donné de plis ait été réalisé. Pour compacter la pièce drapée, il suffit de déplacer le plan de travail du dispositif de drapage 30 vers le moyen de compactage 46. On recouvre alors le plan de travail 32b avec la membrane 48 et on crée un vide entre le plan de travail et cette membrane.

Le système de drapage de l'invention peut être utilisé pour réaliser alternativement plusieurs pièces drapées. Pour cela, il suffit que les moyens de génération des découpes délivre, au poste 20 de la machine de découpe 18 et aux moyens de commande, la géométrie des découpes en mélangeant les découpes des différentes pièces. Dans ce cas, lors du drapage, les moyens de commande sont aptes à informer l'opérateur, via les moyens d'assistance 38, de la pièce correspondant à chaque découpe réalisée par la machine de découpe 18. Ce mixage est intéressant notamment lorsque deux pièces sont réalisées sur deux plans de travail différents, car alors l'opération de compactage se fait en même temps que l'opération de drapage.

**Revendications**

1. Système intégré de drapage pour la réalisation d'une pièce drapée constituée d'un empilage de plis, chaque pli étant constitué d'une juxtaposition de découpes, ledit système comprenant:
- une machine de découpe (18) comprenant un outil de coupe (22), ladite machine étant commandée par un poste de commande numérique (20) préprogrammé pour réaliser des découpes de formes prédéterminées dans un matériau composite recouvert d'un papier séparateur,
- un dispositif de drapage (30) comprenant un plan de travail (32a) destiné à recevoir les découpes produites par la machine de découpe (18),

– un moyen de compactage (46) pour compacter une pièce présente sur le plan de travail,

– un dispositif de commande (44) comprenant:

a) un moyen de génération des formes des découpes d'une pièce drapée, en fonction de la forme de ladite pièce et de la forme du matériau composite utilisé,

b) un moyen de commande pour programmer le poste de commande numérique selon les formes des découpes définies par le moyen de génération,

– un moyen de contrôle (40) pour saisir une image de la pièce en cours de réalisation sur le plan de travail, ledit système étant caractérisé en ce qu'il est un système de drapage assisté comprenant en outre:

– un moyen d'analyse, élément du dispositif de commande, pour analyser une image délivrée par le moyen de contrôle afin de vérifier soit la position, soit l'orientation, soit la présence de papier séparateur sur une découpe ou un pli déposé sur le plan de travail, le résultat de ladite analyse étant transmis au moyen de commande,

– un moyen d'assistance (38) comprenant un moyen de visualisation, ledit moyen d'assistance recevant des informations du moyen de commande pour guider un opérateur dans la réalisation d'une pièce drapée, lesdites informations comprenant des informations fonction du résultat d'une analyse réalisée par le moyen d'analyse.

2. Système selon la revendication 1, caractérisé en ce que le plan de travail (32a) est mobile et peut être déplacé entre le dispositif de drapage (30) et le moyen de compactage (46).

3. Système selon la revendication 1, caractérisé en ce que le moyen de commande du dispositif de commande (44) gère le procédé de réalisation d'une pièce drapée par l'émission d'ordres comprenant au moins les ordres suivants:

– ordre d'activation du poste de commande numérique (20) pour la réalisation d'une découpe,

– ordre de positionnement d'une découpe réalisée pour l'opérateur, cet ordre étant transmis par le moyen d'assistance sous forme d'information affichée,

– ordre de correction relatif à une découpe ou un pli déposé sur le plan de travail, cet ordre étant transmis à l'opérateur par le moyen d'assistance.

4. Système selon la revendication 3, caractérisé en ce que le plan de travail (32a) est mobile et peut être déplacé entre le dispositif de drapage (30) et le moyen de compactage (46) et en ce que le moyen de commande du dispositif de commande (44) délivre en outre un ordre de déplacement dudit plan de travail du dispositif de drapage vers le moyen de compactage lorsqu'un nombre déterminé de découpes constituant la pièce drapée sont correctement déposées sur le plan de travail, cet ordre étant transmis à un opérateur par le moyen d'assistance (38).

5. Système selon l'une quelconque des revendications 3 et 4, caractérisé en ce que le plan de travail (32a) comporte un cadre fixe (34) et une réglette mobile (36) et en ce que le moyen de commande du dispositif de commande (44) délivre un ordre de positionnement de la réglette (36) à l'opérateur pour définir, avant la réalisation de la pièce drapée, un cadre réduit dans lequel l'opérateur déposera les découpes.

6. Système selon l'une quelconque des revendications 1 à 5, caractérisé en ce que le moyen de contrôle (40) est fixé au dispositif de drapage (30), et en ce que ledit dispositif de drapage comprend en outre un moyen d'éclairage (42) du plan de travail (32a).

**Claims**

1. Integrated draping system for producing a draped part constituted by a stack of layers, each layer being constituted by a juxtapositioning of cuts or cut portions, the system comprising:

a cutting machine (18) incorporating a cutting tool (22), said machine being controlled by a preprogrammed digital control station (20) for producing cuts of predetermined shapes in a composite material covered by a separating paper,

a draping device (30) having a working plane (32a) for receiving the cuts produced by the cutting machine (18),

a compacting means (46) for compacting a part present on the working plane,

a control device (44) comprising:

a) a means for generating shapes of the cuts of the draped part, as a function of the shape of said part and the shape of the composite material used,

b) a control means for programming the digital control station as a function of the shapes of the cuts defined by the generating means,

a checking means (40) for acquiring an image of the part being produced on the working plane, said system being characterized in that it is an assisted draping system, which also comprises:

an analysis means, which is a component of the control device, for analysing an image supplied by the checking means in order to check either the position, or the orientation, or the presence of separating paper on a cut or a layer deposited on the working plane, the result of said analysis being transmitted to the control means, an assistance means (38) incorporating a display means, said assistance means receiving information from the control means for guiding an operator in making a draped part, said information incorporating information which is a function of the result of an analysis carried out by the analysis means.

2. System according to claim 1, characterized in that the working plane (32a) is mobile and can be displaced between the draping device (30) and the compacting means (46).

3. System according to claim 1, characterized in that the control means of the control device (44) controls the process of producing a draped part by issuing instructions at least including the following instructions:

instruction for activating the digital control station (20) for making a cut,

instruction for the positioning of a cut produced for the operator, said instruction being transmitted by the assistance means in the form of a displayed information,

correction instruction relative to a cut or a layer deposited on the working plane, said instruction being transmitted to the operator by the assistance means.

4. System according to claim 3, characterized in that the working plane (32a) is mobile and can be displaced between the draping device (30) and the compacting means (46) and in that the control means of the control device (44) also supplies an instruction for the displacement of said working plane of the working device towards the compacting means, when a given number of cuts constituting the draped part are correctly deposited on the working plane, said instruction being transmitted to an operator by the assistance means (38).

5. System according to either of the claims 3 and 4, characterized in that the working plane (32a) has a fixed frame (34) and a movable slide (36) and in that the control means of the control device (44) supplies an instruction for the positioning of the slide (36) to the operator, so as to define, before making the draped part, a reduced frame in which the operator will deposit the cuts.

6. System according to any one of the claims 1 to 5, characterized in that the checking means (40) is fixed to the draping device (30) and in that the draping device (30) also comprises a means (42) for illuminating the working plane (32a).

## Patentansprüche

1. Integriertes System zum Auflegen bei der Herstellung eines geschichteten Teils, welches von einer Schichtung von Lagen gebildet ist, wobei jede Lage durch Nebeneinanderlegen von Zuschnitten gebildet ist, wobei das genannte System umfasst:
- eine Schneidemaschine (18) mit einem Schneidewerkzeug (22), wobei die genannte Maschine von einer vorprogrammierten, digitalen Leitstation (20) gesteuert ist, um Zuschnitte mit vorbestimmten Formen von einem mit einem Trennpapier überdeckten Verbundwerkstoff herzustellen,
- eine Auflegeeinrichtung (30) mit einer Arbeitsfläche (32a), die zur Aufnahme der von der Schneidemaschine (18) erzeugten Zuschnitte bestimmt ist,
- eine Zusammenpressvorrichtung (46), um ein sich auf der Arbeitsfläche befindendes Teil zusammenzudrücken,
- eine Steuervorrichtung (44), welche aufweist:
  a) eine Einrichtung zum Erzeugen von Formen der Zuschnitte eines geschichteten Teils in Abhängigkeit von der Form des genannten Teils und der Art des verwendeten Verbundwerkstoffs,
  b) eine Steuereinrichtung zum Programmieren der digitalen Leitstation entsprechend den Formen der durch die Erzeugungseinrichtung festgelegten Zuschnitte,
- eine Überwachungseinrichtung (40) zum Erfassen eines Bildes des sich in Herstellung auf der Arbeitsfläche befindenden Teils,
wobei das genannte System dadurch gekennzeichnet ist, dass es ein rechnergestütztes System zum Auflegen ist, welches ferner umfasst:
- als Teil der Steuervorrichtung eine Analyseeinrichtung, um ein von der Überwachungseinrichtung geliefertes Bild zu analysieren, um die Lage, die Ausrichtung, das Vorhandensein von Trennpapier auf einem Zuschnitt oder eine auf die Arbeitsfläche aufgebrachte Lage zu überprüfen, wobei das Ergebnis der genannten Analyse an die Steuereinrichtung übertragen wird,
- eine eine Sichteinrichtung aufweisende Hilfseinrichtung (38), die Informationen von der Steuereinrichtung erhält, um eine Betriebsperson bei der Herstellung eines geschichteten Teils zu leiten, wobei die genannten Informationen Informationen umfassen, die vom Ergebnis einer von der Analyseeinrichtung durchgeführten Analyse abhängen.

2. System nach Anspruch 1, dadurch gekennzeichnet, dass die Arbeitsfläche (32a) bewegbar ist und zwischen der Vorrichtung zum Auflegen (30) und der Zusammenpressvorrichtung (46) bewegt werden kann.

3. System nach Anspruch 1, dadurch gekennzeichnet, dass die Steuereinrichtung der Steuervorrichtung (44) das Verfahren zur Herstellung eines geschichteten Teils durch Ausgabe von Befehlen leitet, die zumindest die folgenden Befehle umfassen:
- Betätigungsbefehl für die digitale Leitstation (20) zur Herstellung eines Zuschnitts,
- Positionierungsbefehl für einen hergestellten Zuschnitt an die Betriebsperson, wobei dieser Befehl durch die Hilfseinrichtung in der Form einer angezeigten Information übertragen wird,
- Korrekturbefehl in bezug auf einen oder eine auf die Arbeitsfläche aufgelegten Zuschnitt bzw. aufgelegte Lage, wobei dieser Befehl an die Betriebsperson über die Hilfseinrichtung übertragen wird.

4. System nach Anspruch 3, dadurch gekennzeichnet, dass die Arbeitsfläche (32a) bewegbar ist und zwischen der Auflegeeinrichtung (30) und der Zusammenpressvorrichtung (46) bewegt werden kann und dass die Steuereinrichtung der Steuervorrichtung (44) ferner einen Befehl zum Bewegen der genannten Arbeitsfläche der Auflegeeinrichtung zu der Zusammenpressvorrichtung abgibt, wenn eine vorbestimmte Anzahl von den geschichteten Teil bildenden Zuschnitten richtig auf die Arbeitsfläche aufgelegt ist, wobei dieser Befehl an eine Betriebsperson durch die Hilfseinrichtung (38) übertragen wird.

5. System nach irgendeinem der Ansprüche 3 oder 4, dadurch gekennzeichnet, dass die Arbeitsfläche (32a) einen festen Rahmen (34) und eine bewegbare Leiste (36) aufweist, und dass die Steuereinrichtung der Steuervorrichtung (44) einen Befehl zum Positionieren der Leiste (36) an die Betriebsperson abgibt, um vor der Herstellung des geschichteten Teils einen verkleinerten Rahmen festzulegen, in dem die Betriebsperson die Zuschnitte niederlegt.

6. System nach irgendeinem der Ansprüche 1 bis 5, dadurch gekennzeichnet, dass die Überwachungseinrichtung (40) an der Auflegeeinrichtung (30) befestigt ist und dass die genannte Auflegeeinrichtung ferner eine Beleuchtungseinrichtung (42) für die Arbeitsfläche (32a) aufweist.

FIG. 1a

FIG. 1b

FIG. 1c

FIG. 2